# EUROPÄISCHE PATENTSCHRIFT

(11) **EP 2 616 836 B1**
(45) Veröffentlichungstag und Bekanntmachung des Hinweises auf die Patenterteilung: **17.12.2014**
(21) Anmeldenummer: 11767187.5
(22) Anmeldetag: 31.08.2011
(51) Int. Cl.: G01S 7/521, B60R 19/48

(54) **ANORDNUNG MIT EINEM STOßFÄNGER UND EINEM ULTRASCHALLSENSOR UND FAHRZEUG MIT EINER DERARTIGEN ANORDNUNG**
ARRANGEMENT HAVING A BUMPER AND AN ULTRASONIC SENSOR AND VEHICLE HAVING SUCH AN ARRANGEMENT
SYSTÈME COMPRENANT UN PARE-CHOCS ET UN CAPTEUR ULTRASONORE ET VÉHICULE ÉQUIPÉ D'UN TEL SYSTÈME

(30) Priorität: 18.09.2010 DE 102010045971
(43) Veröffentlichungstag der Anmeldung: 24.07.2013
(73) Patentinhaber: Valeo Schalter und Sensoren GmbH, 74321 Bietigheim-Bissingen (DE)
(72) Erfinder: ROSTOCKI, Paul-David, 74177 Bad Friedrichshall (DE); HALLEK, Michael, 71717 Beilstein (DE)
(86) Internationale Anmeldenummer: PCT/EP2011/065030
(87) Internationale Veröffentlichungsnummer: WO 2012/034864

(56) Entgegenhaltungen:
- EP-A2- 1 710 785
- WO-A1-02/12027
- WO-A1-2009/144545

## Beschreibung

Die Erfindung betrifft eine Anordnung mit einem Stoßfänger für ein Fahrzeug und mit einem Ultraschallsensor, welcher an dem Stoßfänger angeordnet ist, wobei der Ultraschallsensor einen Entkopplungsring aufweist, der sich bereichsweise in eine Aussparung des Stoßfängers erstreckt. Des Weiteren betrifft die Erfindung ein Fahrzeug mit einer derartigen Anordnung.

Es ist bekannt, dass in den vorderen bzw. hinteren Stoßfängern eines Kraftwagens Ultraschallsensoren angebracht sein können. Mit Ihnen lässt sich die Umgebung eines Fahrzeugs erfassen, wobei die detektieren Umgebungsinformationen beispielsweise einer Fahrerassistenzeinrichtung zur Verfügung gestellt werden. Insbesondere können solche Sensoren Teil eines Parkassistenzsystems sein.

Um zu verhindern, dass Schwingungen von dem Stoßfänger auf den Ultraschallsensor übertragen werden, ist üblicherweise an dem Ultraschallsensor ein Entkopplungsring vorgesehen. Dieser umschließt üblicherweise den Membrantopf des Ultraschallsensors und dient damit gleichzeitig zur Abdichtung des Membrantopfes gegenüber möglichem Wassereintritt. Da der Entkopplungsring in der Regel mit dem übrigen Ultraschallsensor nicht permanent fest verbunden ist, ist es erforderlich, den Entkopplungsring an dem Ultraschallsensor gesichert zu befestigen.

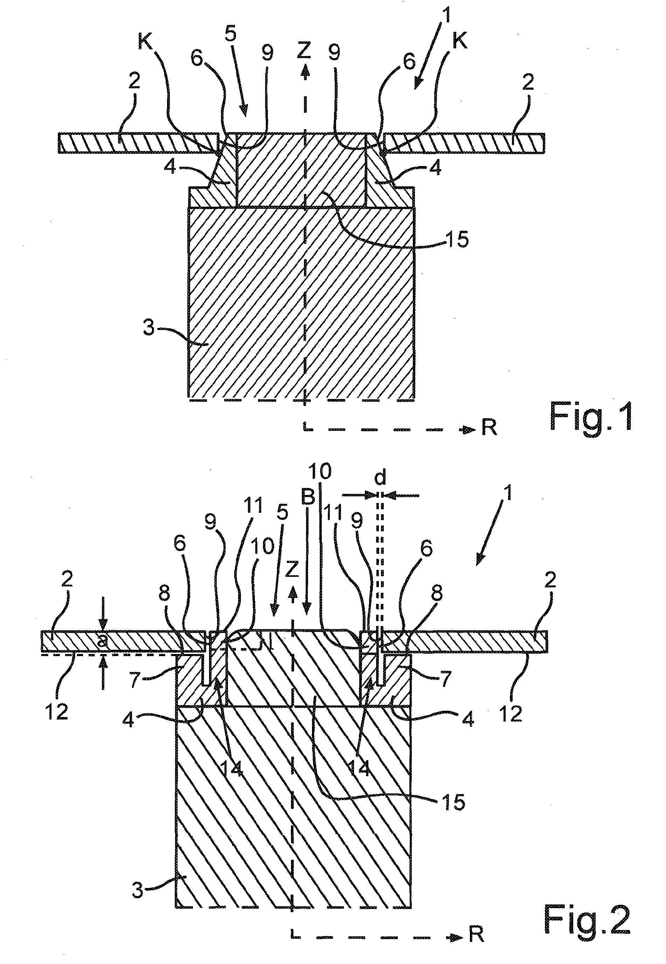

Neuere Versionen von Ultraschallsensoren besitzen einen konischen Entkopplungsring. Ein solcher Entkopplungsring 4 ist in Fig. 1 dargestellt. Er umschließt einen Membrantopf 15 eines Ultraschallsensors 3. Um das Aussenden bzw. Detektieren von Ultraschall durch den Ultraschallsensor 3 zu ermöglichen, ist in der Regel eine Aussparung 5 in einem Stoßfänger 2 vorgesehen. Der Ultraschallsensor 3 ist dann üblicherweise gegenüber dem Stoßfänger 2 so angeordnet, dass er sich zumindest mit seinem Membrantopf 15 bereichsweise in die Aussparung 5 erstreckt. Es ist üblich, den Ultraschallsensor 3 so zu positionieren, dass die Oberseite des Membrantopfes 15 bündig mit der Außenseite des Stoßfängers abschließt.

Der Entkopplungsring 4 dient nun dazu, den Membrantopf 15 vor Feuchtigkeit und dem Eindringen von Wasser zu schützen. Hierdurch können Fehlfunktionen des Ultraschallsensors 3 vermieden werden. Andererseits soll der Membrantopf 15 vom Stoßfänger 2 schwingungsentkoppelt werden. Der Entkopplungsring 4 füllt hierzu teilweise einen Bereich aus, welcher zwischen dem Membrantopf 15 und dem Stoßfänger 2 liegt. Eine Außenseite 6 eines sich in die Aussparung 5 erstreckenden Teilbereichs des Entkopplungsrings 4 kommt dabei gegenüber einer Innenseite 9 der Aussparung 5 zu liegen.

Die konische Ausbildung des Entkopplungsrings 4 bedingt im Querschnitt dreieckförmige Teilbereiche des Entkopplungsrings 4, deren mechanische Wechselwirkung mit dem Stoßfänger 2 den Ultraschallsensor 3 auch in axialer Richtung zumindest teilweise verankert. Der Entkopplungsring 4 berührt hierbei den Stoßfänger 2 entlang einer Kante K.

Diese so aus dem Stand der Technik bekannte Anordnung 1 weist Nachteile auf. Die Aussparung 5 wird üblicherweise durch Stanzung im Stoßfänger 2 gebildet. Die Stanzung kann hierbei nicht immer so durchgeführt werden, dass sich eine Aussparung 5 mit konstantem Durchmesser ergibt. Der Durchmesser der Aussparung 5 unterliegt vielmehr gewissen Toleranzen bzw. Variationen. Wird der Ultraschallsensor 3 in axialer Richtung Z gegenüber dem Stoßfänger 2 auf konstantem Abstand gehalten, kann sich deshalb der Entkopplungsring 4 gegebenenfalls in axialer Richtung Z bewegen. Er ist nämlich in der Regel nicht fest mit dem Ultraschallsensor 3 verbunden. Hierdurch kann sich ein in radialer Richtung R verlaufender Spalt zwischen Entkopplungsring 4 und Ultraschallsensor 3 auftun. In diesen kann Wasser eindringen und gegebenenfalls bei niedrigen Temperaturen gefrieren. Hierdurch wird die Funktionsfähigkeit des Ultraschallsensors 3 negativ beeinflusst. Dieser unerwünschte Effekt kann beispielsweise beim Waschen des Fahrzeugs mit einem Hochdruckreiniger auftreten. Die auftretenden Drücke können den Entkopplungsring 4 in axialer Richtung Z verrücken, so dass dieser ein wenig über die Außenseite des Stoßfängers 2 herausragen kann.

Die Toleranzen im Stanzdurchmesser der Aussparung 5 können folglich eine gute Fixierung des Entkopplungsrings 4 verhindern. Dieser liegt dann nicht mehr an einer Kante K an dem Stoßfänger 2 an. Ist umgekehrt dagegen ein Anliegen an der Kante K stets erwünscht, so können die Variationen im Durchmesser der Aussparung 5 bewirken, dass der Ultraschallsensor 3 in axialer Richtung Z nicht immer optimal gegenüber dem Stoßfänger 2 positioniert ist. Beispielsweise kann dann der unerwünschte Effekt auftreten, dass der Membrantopf 15 über die Außenseite des Stoßfängers 2 hinausragt.

Ein konischer Entkopplungsring ist beispielsweise aus der DE 100 39 060 A1 bekannt.

WO 2009/144545 A1 offenbart eine Vorrichtung zum Verbinden von Ultraschallwandlern an Fahrzeugstoßstangen.

EP 1 710 785 A2 offenbart einen Ultraschallsensor, der in einem Durchbruch eines Stoßfängers angeordnet ist und von einem elastischen Entkopplungsmittel umgeben ist. Das Entkopplungsmittel wird zwischen den Stoßfänger und die Membran sowie das Gehäuse des Ultraschallsensors eingespritzt. Die Anordnung von Stoßfängen und Ultraschallsensor entspricht dem Oberbegriff des Anspruchs 1.

Es ist Aufgabe der Erfindung, eine Anordnung zu schaffen, mit der sich die Entkopplung eines Ultraschallsensors von einem Stoßfänger verbessern lässt und bei der der axiale Abstand des Ultraschallsensors vom Stoßfänger sehr gut eingestellt werden kann. Ebenso ist es Aufgabe, ein Fahrzeug mit einer derartigen Anordnung zu schaffen.

Diese Aufgabe wird durch eine Anordnung gelöst, welche die Merkmale des Patentanspruchs 1 aufweist, und ein Fahrzeug gelöst, welches die Merkmale nach Anspruch 11 aufweist.

Eine erfindungsgemäße Anordnung umfasst einen Stoßfänger und einen Ultraschallsensor, welcher an dem Stoßfänger angeordnet ist. Der Ultraschallsensor ist insbesondere so am Stoßfänger angeordnet, dass er sich zumindest bereichsweise in eine Aussparung im Stoßfänger erstreckt. Er kann dabei insbesondere im Bereich der Aussparung im Stoßfänger zur Detektion durch die Aussparung angeordnet sein. Die Aussparung kann insbesondere als Durchgangsöffnung oder als Sackloch ausgebildet sein. Sie kann beispielsweise als Durchgangsöffnung ausgebildet sein, welche insbesondere an der Außenseite des Stoßfängers durch ein geeignetes Abdeckelement verschlossen ist. Ein solches Abdeckelement kann beispielsweise ein dünner Wandbereich des Stoßfängers selbst oder eine flexible Folie sein. Der an dem Stoßfänger angeordnete Ultraschallsensor kann insbesondere Teil einer Fahrerassistenzeinrichtung eines Kraftwagens sein. Der Stoßfänger ist dann insbesondere ein Außenverkleidungselement des Fahrzeugs bzw. Kraftwagens.

In der erfindungsgemäßen Anordnung umfasst der Ultraschallsensor einen Entkopplungsring, welcher sich zumindest bereichsweise in eine Aussparung des Stoßfängers erstreckt. Der Entkopplungsring dient insbesondere der mechanischen bzw. Schwingungsentkopplung des Ultraschallsensors vom Stoßfänger. Weiterhin ist erfindungsgemäß vorgesehen, dass ein Abstandshalteelement ausgebildet ist, welches sich in radialer Richtung weiter außen befindet als eine Außenseite des sich in die Aussparung erstreckenden Teilbereichs des Entkopplungsrings. Bei dem Teilbereich des Entkopplungsrings kann es sich insbesondere um einen Bereich handeln, welcher einen Membrantopf des Ultraschallsensors umgibt und diesen vom Stoßfänger mechanisch entkoppelt. Das Abstandshalteelement ist erfindungsgemäß dazu ausgebildet, den Ultraschallsensor in axialer Richtung des Ultraschallsensors relativ zum Stoßfänger auf Abstand zu halten. Eine Oberseite des Abstandshalteelements dient dabei als flächiges Auflageplateau für den Stoßfänger. Die axiale Richtung kann insbesondere senkrecht zu einer Innen- und/oder Außenseite des Stoßfängers verlaufen, welche sich unmittelbar in der Umgebung der Aussparung befindet. Das Abstandshalteelement kann einstückig oder mehrstückig ausgebildet sein. Im Falle einer mehrstückigen Ausbildung können die einzelnen Stücke auch als einzelne Abstandshalteelemente bezeichnet werden. Bei dem Auflageplateau handelt es sich um eine oder mehrere Seiten des Abstandshalteelements, welche in flächigem Kontakt mit dem Stoßfänger, insbesondere mit einer Innenseite des Stoßfängers, stehen. Insbesondere stützt das Abstandshalteelement den Entkopplungsring und/oder den Ultraschallsensor von dem Stoßfänger ab.

Das Abstandshalteelement erlaubt es, den Entkopplungsring und/oder den Ultraschallsensor von dem Stoßfänger auf im Wesentlichen konstantem Abstand zu halten. Das Abstandshalteelement kann dabei selbst die Funktion einer mechanischen Entkopplung übernehmen. Durch das Abstandshalteelement kann der Sensor einfach und sicher auf konstantem Relativabstand zum Stoßfänger gehalten werden. Ein unerwünschtes axiales Verrücken des Ultraschallsensors wird sicher und effektiv unterbunden. Durch die Ausgestaltung der Anordnung mit einem Entkopplungsring und einem Abstandshalteelement kann die Schwingungsentkopplung des Ultraschallsensors vom Stoßfänger verbessert werden. Die Dichtheit des Ultraschallsensors gegenüber Flüssigkeiten, z. B. Wasser, ist stets gewährleistet, da das Auftreten eines Spaltes zwischen Ultraschallsensor und Entkopplungsring ideal unterbunden wird. Die Genauigkeit in der Größe der Aussparung im Stoßfänger hat keinen Einfluss auf die Dichtheit des Ultraschallsensors mehr. Die Anordnung erlaubt insgesamt größere Toleranzen bei der technischen Ausbildung der Aussparung durch Bohren bzw. Stanzen, wodurch sich die Herstellungskosten der Anordnung bei gleichzeitig hoher Qualität reduzieren lassen.

Besonders vorteilhaft sind das Abstandshalteelement und der Entkopplungsring einstückig ausgebildet. Das Abstandshalteelement bildet dann einen Teilbereich des Entkopplungsrings. Zwei unterschiedliche Funktionalitäten können so einfach und unkompliziert in einem gemeinsamen Bauteil zusammengefasst werden. Unerwünschte Veränderungen in der Relativposition des Entkopplungsrings zum Abstandshalteelement können sicher vermieden werden. Die hohe bauliche Integration garantiert geringe Herstellungskosten.

Vorzugsweise sind innerhalb der Anordnung Stoßfänger und Entkopplungsring so zueinander angeordnet, dass die Außenseite des Entkopplungsrings für den sich in die Aussparung erstreckenden Teilbereich des Entkopplungsrings zu einer Innenseite der Aussparung beabstandet ist. Der Bereich des Entkopplungsrings, der innerhalb der Aussparung des Ultraschallsensors liegt, hat also zur Innenwand der Aussparung einen bestimmten Abstand. Der Entkopplungsring berührt also innerhalb der Aussparung die Innenseite der Aussparung nicht. Beispielsweise kann die Aussparung kreisrund mit einem definierten Durchmesser ausgebildet sein. Auch der Entkopplungsring kann im Querschnitt kreisrund, z. B. als Kreiszylinder, ausgebildet sein. Der Außendurchmesser des Kreiszylinders kann dann insbesondere geringer als der Durchmesser der Aussparung sein. Innerhalb der Aussparung stehen der Entkopplungsring und der Stoßfänger also in keinem direkten mechanischen Kontakt zueinander. Hierdurch ergibt sich eine besonders effektive Abkopplung beider Elemente und es wird nur sehr wenig Schwingungsenergie übertragen. Auch bei hohen Variationen bzw. Toleranzen für den Durchmesser der Aussparung im Stoßfänger ergibt sich dennoch eine sichere und unproblematische Befestigung des Ultraschallsensors am Stoßfänger. Die axiale Sollposition des Ultraschallsensors kann unabhängig von dem Durchmesser der Aussparung eingehalten werden. Die exakte Größe der Aussparung hat dann keinen Einfluss auf die exakte Positionierbarkeit des Ultraschallsensors. Empfindliche Teile des Ultraschallsensors können sicher von dem Entkopplungsring umschlossen werden, so dass unerwünschter Wassereintritt vermieden wird. Auch für den Fall, dass Eisbildung zwischen dem Entkopplungsring und dem Stoßfänger eintritt, oder sich in diesem Bereich Schmutz ansammelt, ist dennoch eine sehr gute Entkopplung gewährleistet.

Vorzugsweise ist zumindest in dem sich in die Aussparung erstreckenden Teilbereich des Entkopplungsrings die Außenseite des Entkopplungsrings vertikal ausgebildet. Ist beispielsweise auch die Innenseite der Aussparung vertikal ausgebildet, dann verlaufen die Außenseite des Entkopplungsrings und die Innenseite der Aussparung parallel zueinander. Die vertikale Ausbildung bezieht sich auf einen parallelen Verlauf der jeweiligen Seite zu einer in Axialrichtung verlaufenden Gerade. Die vertikale Ausbildung der Außenseite des Entkopplungsrings vermeidet zuverlässig eine Verkeilung des Entkopplungsrings im Stoßfänger. Der Entkopplungsring sitzt dann besonders sicher an dem Ultraschallsensor. Ein unerwünschtes Abziehen des Entkopplungsrings vom Ultraschallsensor durch eine Verkeilung bzw. einen Kraftschluss des Entkopplungsrings mit dem Stoßfänger kann zuverlässig vermieden werden. Hierdurch wird die permanente Dichtheit des Ultraschallsensors gegenüber Wasser gewährleistet.

Vorzugsweise ist der axiale Abstand zwischen der Oberseite des Abstandshalteelements und der Oberseite des Entkopplungsrings gleich der axialen Länge des sich in die Aussparung erstreckenden Teilbereichs des Entkopplungsrings. Diese Ausführungsform erlaubt es, den Entkopplungsring mittels des Abstandshalteelements gegenüber dem Stoßfänger so auf Abstand zu halten, dass die Außenseite des Stoßfängers in der unmittelbaren Umgebung der Aussparung bündig mit der Oberseite des Entkopplungsrings abschließt. Vorzugsweise wird dann auch der Ultraschallsensor so angeordnet sein, dass eine seiner Seiten (z. B. eine Detektionsseite eines Membrantopfes) bündig mit der Oberseite des Entkopplungsrings bzw. bündig mit der die Aussparung umgebenden Außenseite des Stoßfängers abschließt. Entkopplungsring und gegebenenfalls Ultraschallsensor sind dann ideal gegenüber dem Stoßfänger positioniert. Es ergibt sich eine hohe Detektionsgenauigkeit bei gleichzeitig ästhetisch und glatt wirkender Außenseite der Anordnung.

Vorzugsweise ist die Oberseite des Abstandshalteelements horizontal ausbildet. Dann ist insbesondere das Auflageplateau horizontal ausgebildet. Horizontal bedeutet hier im Wesentlichen parallel zu einer Ebene, welche senkrecht auf einer Geraden steht, welche in Axialrichtung verläuft. Insbesondere kann die Oberseite des Abstandhalteelements parallel zur Oberseite des Entkopplungsrings und/oder parallel zur Oberseite des Ultraschallsensors und/oder parallel zu einer Innenseite des Stoßfängers, welche die Aussparung unmittelbar umgibt und/oder parallel zu einer Außenseite des Stoßfängers, welche die Aussparung unmittelbar umgibt, verlaufen. Es ergibt sich ein Auflageplateau mit besonders großer Auflagefläche, so dass eine besonders gute Abstützung des Entkopplungsrings am Stoßfänger gewährleistet ist.

Vorzugsweise liegt die Oberseite des Abstandshalteelements direkt an einer Innenseite des Stoßfängers an. Bei der Innenseite des Stoßfängers kann es sich insbesondere um einen Bereich handeln, welcher die Aussparung an der Innenwandung des Stoßfängers unmittelbar umgibt. Ein definierter Abstand lässt sich so sehr konstant einhalten.

Erfindungsgemäß weist der Entkopplungsring einen hohlzylinderförmigen Teilbereich auf, wobei in Umlaufrichtung um diesen Teilbereich herum das Abstandselement in Form einer Mehrzahl von Stegen und/oder Lamellen und/oder Noppen angeordnet ist. Die Stege können beispielsweise mit dem hohlzylinderförmigen Teilbereich fest verbunden sein und radial von der Rotationsachse des Teilbereichs weg verlaufen. Ebenso können beispielsweise die Lamellen in Form rechteckiger Rippen ausgebildet sein, deren Längsseite in radialer Richtung des Hohlzylinders verläuft. Es kann auch ein umlaufender Kranz von Noppen bzw. im Querschnitt kreisrunder Säulen ausgebildet sein. Stege, Lamellen und Noppen lassen sich besonders einfach flexibel bzw. elastisch ausbilden, so dass das Abstandshalteelement als elastisches Federelement zwischen dem Stoßfänger und dem Entkopplungsring dienen kann. Gleichzeitig können Materialverbrauch und Gewicht gering gehalten werden.

Zusätzlich kann vorgesehen sein, dass das Abstandshalteelement einen in Umlaufrichtung um einen hohlzylinderförmigen Teilbereich des Entkopplungsrings voll umlaufenden ringförmigen Teilkörper umfasst. Der ringförmige Teilkörper kann dann insbesondere selbst die Form eines Hohlzylinders aufweisen. Durch ihn kann besonders einfach eine konstante Distanz zum Stoßfänger hergestellt werden.

Vorzugsweise ist zwischen dem hohlzylinderförmigen Teilbereich des Entkopplungsrings und dem Abstandshalteelement wenigstens über eine Teillänge der gesamten Umlauflänge eine Fuge ausgebildet. Umfasst das Abstandshalteelement beispielsweise Lamellen, so kann zwischen den Lamellen und dem hohlzylinderförmigen Teilbereich eine Spalte bzw. Ritze vorgesehen sein, so dass die Lamellen insbesondere mit dem hohlzylinderförmigen Teilbereich nicht in direktem materiellen Kontakt stehen. Auf diese Weise lassen sich besonders einfach elastische Halteelemente ausbilden, da sie aufgrund der Fuge nicht noch zusätzlich am hohlzylinderförmigen Teilbereich abgestützt sind.

Vorzugsweise bestehen der Entkopplungsring und/oder das Abstandshalteelement aus einem flexiblen bzw. elastischen Material, vorzugsweise einem Polymer. Besonders bevorzugt ist hierbei ein Silikon, z. B. LSR (Liquid Silicone Rubber). Das flexible Material erlaubt den Aufbau von Gegendruck zwischen dem Stoßfänger und dem Ultraschallsensor. Der Entkopplungsring kann permanent gegen Ultraschallsensor gepresst werden, so dass die Ausbildung unerwünschter Spalte, in die z. B. Wasser eindringen kann, sicher vermieden wird.

Die Aussparung im Stoßfänger kann als durchgängige Öffnung oder als Sackloch ausgebildet sein und somit frontseitig verschlossen sein.

Weitere Merkmale ergeben sich aus den Ansprüchen, den Figuren und der Figurenbeschreibung. Die vorstehend in der Beschreibung genannten Merkmale und Merkmalskombinationen als auch die in der Figurenbeschreibung genannten Merkmale und Merkmalskombinationen und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung näher erläutert. Es zeigen:
- Fig. 1: eine schematische Schnittdarstellung einer Anordnung mit einem Stoßfänger, einem Ultraschallsensor und einem Entkopplungsring nach dem Stand der Technik;
- Fig. 2: eine schematische Schnittdarstellung einer Anordnung mit einem Stoßfänger, einem Ultraschallsensor, einem Entkopplungsring und einem Abstandshalteelement gemäß einem Ausführungsbeispiel der vorliegenden Erfindung;
- Fig. 3: eine Draufsicht auf den Entkopplungsring und das Abstandshalteelement der Fig. 2 in Blickrichtung B;
- Fig. 4A bis 4D: vier weitere Ausführungsbeispiele für Entkopplungsringe bzw. Abstandshalteelemente.

In den Figuren sind gleiche oder funktionsgleiche Elemente mit den gleichen Bezugszeichen versehen.

Der Stoßfänger 2 der Fig. 2 verläuft im dargestellten Bereich um die Aussparung 5 herum parallel zu einer Ebene, welche senkrecht auf der axialen Richtung Z steht. Die axiale Richtung Z stimmt mit der Rotationsachse eines im Wesentlichen rotationssymmetrisch ausgebildeten Ultraschallsensors 3 überein. Der Ultraschallsensor 3 umfasst insbesondere ein Wandlergehäuse, an dessen Endbereich der Membrantopf 15 anschließt. Der Membrantopf 15 ist ebenfalls zylinderförmig um die axiale Richtung Z ausgebildet. Er erstreckt sich bereichsweise so in die Aussparung 5, dass seine Oberseite bündig mit der Außenseite des Stoßfängers 2 abschließt.

Der Membrantopf 15 ist gegenüber eindringender Nässe abzudichten und gegenüber dem Stoßfänger 2 hinsichtlich möglicher Schwingungsübertragung zu entkoppeln. Hierfür ist er von dem ebenfalls rotationssymmetrisch um die Richtung Z ausgebildeten Entkopplungsring 4 umgeben. Der Entkopplungsring 4 weist einen Teilbereich 10 auf, welcher vollständig im Bereich der Aussparung 5 liegt. Die Außenseite 6 des Entkopplungsrings 4 im Teilbereich 10 kommt gegenüber der Innenseite 9 der Aussparung 5 zu liegen. Sowohl die Innenseite 9 der Aussparung 5 als auch die Außenseite 6 des Teilbereichs 10 des Entkopplungsrings 4 sind parallel zueinander sowie parallel zur axialen Richtung Z ausgebildet; sie verlaufen also vertikal. Die axiale Länge des Teilbereichs 10, welcher sich in der Aussparung 5 erstreckt, ist mit I bezeichnet. Eine Oberseite 11 des Entkopplungsrings 4 ist gleichzeitig die Oberseite des Teilbereichs 10 und schließt bündig mit der Oberseite des Membrantopfes 15 als auch bündig mit der Außenseite des Stoßfängers 2 in der unmittelbaren Umgebung der Aussparung 5 ab.

Der Entkopplungsring 4 ist insbesondere im Bereich der Aussparung 5 nicht passgenau zur Aussparung 5 ausgebildet. Er weist stattdessen einen Außendurchmesser auf, welcher geringer als der Durchmesser der Aussparung 5 ist. Zwischen dem Teilbereich 10 und dem Stoßfänger 2 ist deshalb eine Ritze ausgebildet, welche die Dicke d aufweist.

Der Entkopplungsring 4 ist aus Silikon einstückig mit einem Abstandshalteelement 7 ausgebildet. Das Abstandshalteelement 7 ist im Querschnitt im Wesentlichen rechteckförmig und über eine Fuge 14 von einem hohlzylinderförmigen Teilbereich 13 des Entkopplungsrings 4 getrennt. Das Abstandshalteelement 7 besitzt eine Oberseite 8, welche im Ausführungsbeispiel parallel zur Oberseite 11 des Entkopplungsrings 4 und auch parallel zu einer Innenseite 12 des Stoßfängers 2 verläuft. Die Oberseite 8 des Abstandhalterelements 7 berührt die Innenseite 12 des Stoßfängers 2 in einem flächig ausgebildeten Auflageplateau.

Die axialen Ausdehnungen des Abstandhalteelements 7 und des hohlzylinderförmigen Teilbereichs 13 unterscheiden sich voneinander. Hierbei ist der axiale Abstand a zwischen der Oberseite 8 des Abstandshalteelements 7 von der Oberseite 11 des Entkopplungsrings 4 so gewählt, dass er gleich der axialen Länge I des sich in die Aussparung 5 erstreckenden Teilbereichs 10 des Entkopplungsrings 4 ist. Der Entkopplungsring 4 fügt sich damit sehr genau und bündig in die Aussparung 5 und wird dabei über das Abstandshalteelement 7 auf im Wesentlichen konstantem Abstand zum Stoßfänger 2 gehalten.

Da das Abstandshalteelement 7 aus Silikon hergestellt ist, ist es teilweise elastisch. Der Ultraschallsensor 3 ist über einen Halter (nicht dargestellt) am Stoßfänger 2 so befestigt, dass er leichten Druck auf den Entkopplungsring 4 ausübt. Das Abstandshalteelement 7 weicht dadurch leicht elastisch zurück und drückt über seine Abstützung an der Innenseite 12 des Stoßfängers 2 den Entkopplungsring 4 permanent gegen den Ultraschallsensor 3. Die Ausbildung einer Fuge zwischen Entkopplungsring 4 und Ultraschallsensor 3, insbesondere zwischen Entkopplungsring 4 und Membrantopf 15, wird hierdurch sicher vermieden.

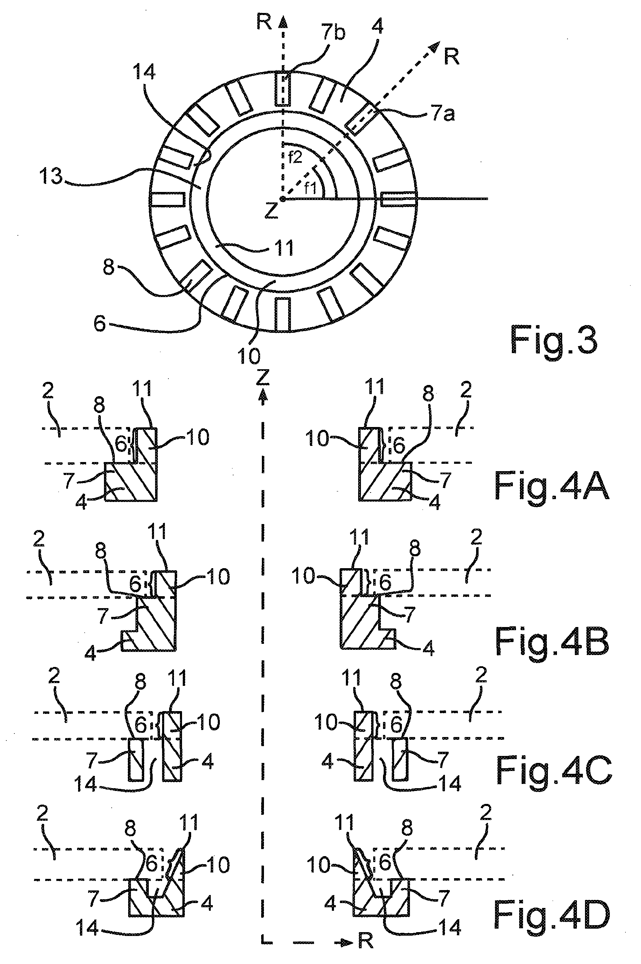

Fig. 3 zeigt eine Draufsicht auf den Entkopplungsring mit dem Abstandshalteelement 7 der Fig. 2 in Blickrichtung B. Neben dem hohlzylinderförmigen Teilbereich 13 ist ein kreisringförmiger Basisbereich des Entkopplungsrings 4 zu erkennen, auf dem das Abstandshalteelement 7 angeordnet ist. Das Abstandshalteelement 7 setzt sich aus einzelnen Lamellen zusammen, von denen exemplarisch die Lamellen 7a und 7b mit Bezugszeichen versehen sind. Die Lamellen sind vollumlaufend um den hohlzylinderförmigen Teilbereich 13 angeordnet, wobei sie sich mit ihrer Längsachse in radialer Richtung R erstrecken. Die Lamellen 7a und 7b unterscheiden sich hinsichtlich ihrer Winkelkoordinaten f1 bzw. f2 und sind in gleichem radialen Abstand zum hohlzylinderförmigen Teilbereich 13 angeordnet. Alle Lamellen, darunter auch die Lamellen 7a und 7b, bilden gemeinsam das (zusammengesetzte) Abstandshalteelement 7.

Die Fig. 4A bis 4D zeigen weitere Ausführungsbeispiele für Entkopplungsringe 4 bzw. Abstandshalteelemente 7. Der Verlauf des Stoßfängers 2 ist durch die strichlierten Linien angedeutet. Im Ausführungsbeispiel der Fig. 4A ist das Abstandshalteelement 7 in einen Basisring des Entkopplungsrings 4 integriert. In Fig. 4B wird das Abstandshalteelement 7 durch Stege bzw. Rippen im Entkopplungsring 4 gebildet, welche stufenförmig aus einem hohlzylinderförmigen Teilbereich hervortreten. Fig. 4C zeigt einen Entkopplungsring 4, welcher baulich vom Abstandshalteelement 7 getrennt ist. Beide Elemente sind durch eine ausgeprägte Fuge 14 voneinander getrennt. In diesem Ausführungsbeispiel können der Entkopplungsring 4 und das Abstandshalteelement 7 auch aus unterschiedlichen Materialien gebildet sein. Die einzelnen Wände des Entkopplungsrings 4 müssen nicht orthogonal zur axialen Richtung Z ausgebildet sein. Beispielsweise weist der Teilbereich 10 des Entkopplungsrings 4 im Ausführungsbeispiel der Fig. 4D eine schräg zur axialen Richtung Z verlaufende Außenseite 6 auf, welche im verbauten Zustand insbesondere kontaktfrei zur Innenseite 9 der Aussparung 5 des Stoßfängers 2 angeordnet oder allenfalls leicht kontaktiert ist, jedoch nur so, dass die Kontaktierung keine Position haltende Krafteinwirkung erzeugt, wie dies in Fig. 1 gemäß dem Stand der Technik der Fall ist.

## Patentansprüche

1. Anordnung (1) mit einem Stoßfänger (2) für ein Fahrzeug und mit einem Ultraschallsensor (3), welcher an dem Stoßfänger (2) angeordnet ist, wobei der Ultraschallsensor (3) einen Entkopplungsring (4) aufweist, der sich bereichsweise in eine Aussparung (5) des Stoßfängers (2) erstreckt,
wobei im Vergleich zu einer Außenseite (6) des sich in die Aussparung (5) erstreckenden Teilbereichs (10) des Entkopplungsrings (4) ein in radialer Richtung (R) weiter außen liegendes Abstandshalteelement (7, 7a, 7b) ausgebildet ist, welches zur Abstandshaltung des Ultraschallsensors (3) in axialer Richtung (Z) des Ultraschallsensors (3) relativ zum Stoßfänger (2) angeordnet ist, und eine Oberseite (8) des zumindest einen Abstandshalteelements (7, 7a, 7b) als Auflageplateau für den Stoßfänger (2) ausgebildet ist,
**dadurch gekennzeichnet, dass**
das Abstandshalteelement (7) eine Mehrzahl von in Umlaufrichtung (f1, f2) um einen hohlzylinderförmigen Teilbereich (13) des Entkopplungsrings (4) angeordneten Stegen und/oder Lamellen (7a, 7b) und/oder Noppen umfasst.

2. Anordnung (1) nach Anspruch 1,
**dadurch gekennzeichnet, dass**
das Abstandshalteelement (7, 7a, 7b) und der Entkopplungsring (4) einstückig ausgebildet sind.

3. Anordnung (1) nach Anspruch 1 oder 2,
**dadurch gekennzeichnet, dass**
die Außenseite (6) des sich in die Aussparung (5) erstreckenden Teilbereichs (10) des Entkopplungsrings (4) zu einer Innenseite (9) der Aussparung (5) beabstandet ist.

4. Anordnung (1) nach einem der vorhergehenden Ansprüche,
**dadurch gekennzeichnet, dass**
die Außenseite (6) des sich in die Aussparung (5) erstreckenden Teilbereichs (10) des Entkopplungsrings (4) vertikal ausgebildet ist.

5. Anordnung (1) nach einem der vorhergehenden Ansprüche,
**dadurch gekennzeichnet, dass**
der axiale Abstand (a) zwischen der Oberseite (8) des Abstandshalteelements (7, 7a, 7b) und der Oberseite (11) des Entkopplungsrings (4) gleich der axialen Länge (I) des sich in die Aussparung (5) erstreckenden Teilbereichs (10) des Entkopplungsrings (4) ist.

6. Anordnung (1) nach einem der vorhergehenden Ansprüche,
**dadurch gekennzeichnet, dass**
die Oberseite (8) des Abstandshalteelements (7, 7a, 7b) horizontal ausgebildet ist.

7. Anordnung (1) nach einem der vorhergehenden Ansprüche,
**dadurch gekennzeichnet, dass**
die Oberseite (8) des Abstandshaltelements (7, 7a, 7b) direkt an einer Innenseite (12) des Stoßfängers (2) anliegt.

8. Anordnung (1) nach einem der vorhergehenden Ansprüche,
**dadurch gekennzeichnet, dass**
das Abstandshaltelement (7, 7a, 7b) einen in Umlaufrichtung (f1, f2) um einen hohlzylinderförmigen Teilbereich (13) des Entkopplungsrings (4) vollumlaufenden ringförmigen Teilkörper umfasst.

9. Anordnung (1) nach einem der vorhergehenden Ansprüche,
**dadurch gekennzeichnet, dass**
zwischen dem hohlzylinderförmigen Teilbereich (13) des Entkopplungsrings (4) und dem Abstandshaltelement (7, 7a, 7b) zumindest über eine Teillänge der gesamten Umlauflänge eine Fuge (14) ausgebildet ist.

10. Anordnung (1) nach einem der vorhergehenden Ansprüche,
**dadurch gekennzeichnet, dass**
der Entkopplungsring (4) und/oder das Abstandshalteelement (7, 7a, 7b) aus einem flexiblen Material, vorzugsweise einem Polymer, besonders bevorzugt einem Silikon, ausgebildet ist.

11. Fahrzeug mit einer Anordnung nach einem der vorhergehenden Ansprüche.

## Claims

1. Arrangement (1) having a bumper (2) for a vehicle and having an ultrasonic sensor (3) which is arranged on the bumper (2), wherein the ultrasonic sensor (3) comprises a decoupling ring (4) which extends in regions into a cut-out (5) of the bumper (2),
wherein in comparison to an outer face (6) of the partial region (10) of the decoupling ring (4), which partial region extends into the cut-out (5), an element (7, 7a, 7b) for maintaining a spaced disposition which lies further outwards in the radial direction (R) is embodied, which element for maintaining a spaced disposition is arranged in order to maintain the spaced disposition of the ultrasonic sensor (3) in the axial direction (Z) of the ultrasonic sensor (3) with respect to the bumper (2), and an upper face (8) of the at least one element (7, 7a, 7b) for maintaining a spaced disposition is embodied as a load-bearing surface for the bumper (2),
**characterized in that**
the element (7) for maintaining a spaced disposition comprises a plurality of webs and/or fins (7a, 7b) and/or protrusions that are arranged in the circumferential direction (f1, f2) around a hollow cylindrical partial region (13) of the decoupling ring (4).

2. Arrangement (1) according to Claim 1,
**characterized in that**
the element (7, 7a, 7b) for maintaining a spaced disposition and the decoupling ring (4) are embodied as one part.

3. Arrangement (1) according to Claim 1 or 2,
**characterized in that** the outer face (6) of the partial region (10) of the decoupling ring (4) is at a spaced disposition with respect to an inner face (9) of the cut-out (5), which partial region extends into the cut-out (5).

4. Arrangement (1),
according to any one of the preceding claims, **characterized in that** the outer face (6) of the partial region (10) of the decoupling ring (4) is embodied in a vertical manner, which partial region extends into the cut-out (5).

5. Arrangement (1) according to any one of the preceding claims,
**characterized in that**
the axial spaced disposition (a) between the upper face (8) of the element (7, 7a, 7b) for maintaining a spaced disposition and the upper face (11) of the decoupling ring (4) is equal to the axial length (I) of the partial region (10) of the decoupling ring (4), which partial region extends into the cut-out (5).

6. Arrangement (1) according to any one of the preceding claims,
**characterized in that**
the upper face (8) of the element (7, 7a, 7b) for maintaining a spaced disposition is embodied in a horizontal manner.

7. Arrangement (1) according to any one of the preceding claims,
**characterized in that**
the upper face (8) of the element (7, 7a, 7b) for maintaining a spaced disposition lies directly on an inner face (12) of the bumper (2).

8. Arrangement (1) according to any one of the preceding claims,
**characterized in that**
the element (7, 7a, 7b) for maintaining a spaced disposition comprises an annular partial body that extends in the circumferential direction (f1, f2) completely around a hollow cylindrical partial region (13) of the decoupling ring (4).

9. Arrangement (1) according to any one of the preceding claims,
**characterized in that**
a groove (14) is embodied at least over a part length of the entire circumferential length between the hollow cylindrical partial region (13) of the decoupling ring (4) and the element (7, 7a, 7b) for maintaining a spaced disposition.

10. Arrangement (1) according to any one of the preceding claims,
**characterized in that**
the decoupling ring (4) and/or the element (7, 7a, 7b) for maintaining a spaced disposition is embodied from a flexible material, preferably a polymer, silicone is particularly preferred.

11. Vehicle having an arrangement according to any one of the preceding claims.

## Revendications

1. Agencement (1) comprenant un pare-chocs (2) pour un véhicule et un capteur à ultrasons (3) qui est disposé sur le pare-chocs (2), le capteur à ultrasons (3) présentant une bague de découplage (4) qui s'étend en partie dans un évidement (5) du pare-chocs (2),
un élément d'espacement (7, 7a, 7b) situé davantage à l'extérieur dans la direction radiale (R) par rapport à un côté extérieur (6) de la région partielle (10) de la bague de découplage (4) s'étendant dans l'évidement (5) étant réalisé, lequel est disposé pour maintenir la distance du capteur à ultrasons (3) dans la direction axiale (Z) du capteur à ultrasons (3) par rapport au pare-chocs (2), et un côté supérieur (8) de l'au moins un élément d'espacement (7, 7a, 7b) étant réalisé sous forme de plateau d'appui pour le pare-chocs (2),
**caractérisé en ce que**
l'élément d'espacement (7) comprend une pluralité de nervures et/ou de lamelles (7a, 7b) et/ou de boursouflures disposées dans la direction périphérique (f1, f2) autour d'une région partielle de forme cylindrique creuse (13) de la bague de découplage (4).

2. Agencement (1) selon la revendication 1,
**caractérisé en ce que**
l'élément d'espacement (7, 7a, 7b) et la bague de découplage (4) sont réalisés d'une seule pièce.

3. Agencement (1) selon la revendication 1 ou 2,
**caractérisé en ce que**
le côté extérieur (6) de la région partielle (10) s'étendant dans l'évidement (5) de la bague de découplage (4) est espacé par rapport à un côté intérieur (9) de l'évidement (5).

4. Agencement (1) selon l'une quelconque des revendications précédentes,
**caractérisé en ce que**
le côté extérieur (6) de la région partielle (10) s'étendant dans l'évidement (5) de la bague de découplage (4) est réalisé verticalement.

5. Agencement (1) selon l'une quelconque des revendications précédentes,
**caractérisé en ce que**
la distance axiale (a) entre le côté supérieur (8) de l'élément d'espacement (7, 7a, 7b) et le côté supérieur (11) de la bague de découplage (4) est égale à la longueur axiale (1) de la région partielle (10) s'étendant dans l'évidement (5) de la bague de découplage (4).

6. Agencement (1) selon l'une quelconque des revendications précédentes,
**caractérisé en ce que**
le côté supérieur (8) de l'élément d'espacement (7, 7a, 7b) est réalisé sous forme horizontale.

7. Agencement (1) selon l'une quelconque des revendications précédentes,
**caractérisé en ce que**
le côté supérieur (8) de l'élément d'espacement (7, 7a, 7b) s'applique directement contre un côté intérieur (12) du pare-chocs (2).

8. Agencement (1) selon l'une quelconque des revendications précédentes,
**caractérisé en ce que**
l'élément d'espacement (7, 7a, 7b) comprend un corps partiel de forme annulaire entourant complètement dans la direction périphérique (f1, f2) une région partielle cylindrique creuse (13) de la bague de découplage (4).

9. Agencement (1) selon l'une quelconque des revendications précédentes,
**caractérisé en ce**
**qu'**entre la région partielle cylindrique creuse (13) de la bague de découplage (4) et l'élément d'espacement (7, 7a, 7b) est réalisé un joint (14) au moins sur une longueur partielle de toute la longueur périphérique.

10. Agencement (1) selon l'une quelconque des revendications précédentes,
**caractérisé en ce que**
la bague de découplage (4) et/ou l'élément d'espacement (7, 7a, 7b) sont réalisés en un matériau flexible, de préférence un polymère, particulièrement préférablement une silicone.

11. Véhicule comprenant un agencement selon l'une quelconque des revendications précédentes.
